# EUROPEAN PATENT SPECIFICATION

(11) **EP 0 572 338 B1**
(45) Date of publication and mention of the grant of the patent: **08.10.1997**
(21) Application number: 93420210.2
(22) Date of filing: 25.05.1993
(51) Int. Cl.: G03B 27/58

(54) **Cassette and anti-clockspringing mechanism for a roll of web material**
Kassette mit Rückdrehsperre für bandförmiges Material
Cassette et mécanisme anti-retour pour rouleau de bande

(30) Priority: 29.05.1992 US 890889; 29.05.1992 US 890890
(43) Date of publication of application: 01.12.1993
(73) Proprietor: EASTMAN KODAK COMPANY, Rochester, New York 14650-2201 (US)
(72) Inventor: Dominesey, Andrew Earl, c/o EASTMAN KODAK COMPANY, Rochester, New York 14650-2201 (JP); Harris, Clark Eugene, c/o EASTMAN KODAK COMPANY, Rochester, New York 14650-2201 (JP); Healey, Thomas Charles, c/o EASTMAN KODAK COMPANY, Rochester, New York 14650-2201 (JP); Hulbert, Raymond Donald, c/o EASTMAN KODAK COMPANY, Rochester, New York 14650-2201 (JP); Shaw, Joel Raymond, c/o EASTMAN KODAK COMPANY, Rochester, New York 14650-2201 (JP)
(74) Representative: Buff, Michel

(56) References cited:
- EP-A- 0 348 192
- EP-A- 0 444 309
- US-A- 1 809 267
- RESEARCH DISCLOSURE no. 163, 1 November 1977, HAVANT GB pages 43 - 44 'NR. 16352 CORE LOCKING DEVICE FOR WEB DISPENSING CASSETTE'

## Description

### FIELD OF THE INVENTION

The present invention relates generally to web cassettes, and more specifically to an anti-clockspringing of the wound roll of web material within the cassette.

### BACKGROUND OF THE INVENTION

In various cassettes now in use for webs of photosensitive film and paper, the web is wound on a spool or core, with or without flanges, and is disposed within a cassette which totally surrounds the web and protects it from light and other damaging effects. One end of the web is normally secured to the core or spool center, and the other end extends out of the cassette through an exit slot therein. The other end of the web is fastened to the surface of the cassette, and is released therefrom for insertion into a camera or the like. It has been found that there is a tendency for the web in such cassettes to unwind during handling and shipping. Inasmuch as the inner end of the web is connected to the core or the spool center, and the other end is normally secured to the outer surface of the cassette, the web acts as a released clockspring, turning the spool as it unwinds. Such web clockspringing can result in scratching of the surface of adjacent web convolutions, causing a deterioration in the quality of the image that may be recorded thereon. In other instances the web can clockspring outwardly to the extent that the outer convolution of web jams against the inner surface of the cassette, making subsequent unreeling of the web difficult or impossible. In those situations in which the outer end of the web is not fastened to the surface of the cassette or is inadvertently released from the cassette surface, the clockspringing can cause the outer end of the web to be pulled back through the slot into the cassette, resulting in a cartridge that is completely unusable.

Various attempts have been made to provide anti-clockspringing apparatus to prevent unwinding of the web in cassettes. For example, a core locking device for a web dispensing cassette is disclosed and published as Item No. 16352 in the November 1977 issue of Research Disclosure. In this core-locking apparatus, the web winding core is provided with a slotted end, and a core-locking member is provided that is captive and slidable in one of the two end caps of the cassette. In U.S. Patent No. 3,831,881, an anti-backup device is disclosed comprising a fork-like member located within a hollow core on a rotatable film take-up core. The control member has flexible outwardly extending arms projecting from a body portion. In an engaged position of the control member, the arms thereof slide over internal cam or ratchet surfaces of the take-up core during rotation of the core in the forward (take-up) direction, and hence permits such rotation. On the other hand, these arms engage the cam or ratchet surfaces of the core post to block rotation of the core when an attempt is made to rotate the core in the reverse (unwinding) direction. When the film cartridge is placed within a camera, the fork-like member can be moved axially until it is out of engagement with the camera ratchet surfaces, thereby permitting free rotation of the core in both the forward and reverse directions. In U.S. Patent No. 4,756,418, an anti-clockspringing apparatus is disclosed comprising a clip separate from the core and cassette, having opposite ends thereof insertable through aligned notches and slots in the core and cassette respectively, for locking the core to the cassette.

Core plugs for the core of a roll of web material are known from US-A-1 809 267. However, there are no anti-clockspringing means disclosed.

Therefore a persistent need exists for a web cassette having an improved anti-clockspring mechanism for preventing unwinding of the web in the cassette thereby reducing incidences of damaged cartridges.

### SUMMARY OF THE INVENTION

It is, therefore, an object of the present invention to provide an anti-clockspringing device for a web cassette that is of simple design and construction, thoroughly efficient and reliable in operation, and economical to manufacture.

A further object of the invention is to provide an improved light-tight web cassette for holding and dispensing a roll of photosensitive web material.

Another object of the subject invention is to provide a light-tight web cassette in which the core plug body portion is comprised of rigid and flexible parts.

A more specific object of the present invention is to provide a light-tight web cassette in which the rigid part of the core plug body portion is cylindrical and has a peripheral slot, and the flexible part comprises a flat annular ring, having its inner peripheral edge nesting within the slot, and its outer peripheral edge in frictional engagement with the inner peripheral surface of the core.

A further object of the invention is to provide a light-tight web cassette in which the rigid cylindrical member of each of the core plugs is provided with a plurality of axially spaced slots for receiving a plurality of complementary rings.

A still further object of the invention is to provide a light-tight web cassette in which the rigid part of the core plug body is cylindrical, and the flexible part comprises flexible annular peripheral rings on the rigid part.

Accordingly, for accomplishing these and other objects of the invention, there is provided a light-tight cassette for holding and dispensing a roll of photosensitive web material comprising: means for receiving a web material onto which a roll of web material is wound to form a web roll, the receiving means having an inner peripheral surface defining an axial core opening; a means for surrounding the web roll, the surrounding means having end edges and an axially extending web exit slot; a pair of end portions each having an outer wall defining peripheral recesses for receiving end edges of the surrounding means in light-tight relation, the end portions further having central openings in substantial alignment with the axial core opening, and a plurality of stop means extending radially outwardly from the central openings to the outer wall for interacting with an anti-clockspringing means on the cassette for securing the web core against rotation within the cassette during shipping and handling, and for releasing the web roll for rotation in a forward direction during web transport from the cassette; means for plugging each end portion, each plugging means having a head portion and a body portion, whereby when the plugging means body portion is pressed through the end portion central opening into the axial core opening to an assembled position, the plugging means is rigidly secured to the web roll for rotation therewith, and the end portion are rigidly secured by the plugging means head portion to the surrounding means end edges in light-tight relation; and the anti-clockspringing means comprising an arm on the plugging means head portion movable between a core-blocking position in which the arm extends into the space between two adjacent ones of the stop means, and is engageable with one of the stop means and outer walls for preventing rotation of the web roll, and a core-unblocking position in which the arm is disengaged from the stop means and outer wall for allowing web roll rotation.

### BRIEF DESCRIPTION OF THE DRAWINGS

In the detailed description of the invention presented below, reference is made to the accompanying drawings, in which:
Fig. 1 is a perspective view of a web cassette in which a preferred embodiment of the anti-clockspringing device of this invention is embodied;
Fig. 2 is a vertical section view according to the plane indicated by the line 2-2 of Fig. 1, and further showing one end portion of the cassette exploded;
Fig. 3 is an end view of the web cassette showing the anti-clockspringing device in a core-blocking position; and
Fig. 4 is an end view similar to Fig. 3 showing the anti-clockspringing device in the core-unblocking position.

### DETAILED DESCRIPTION OF THE INVENTION

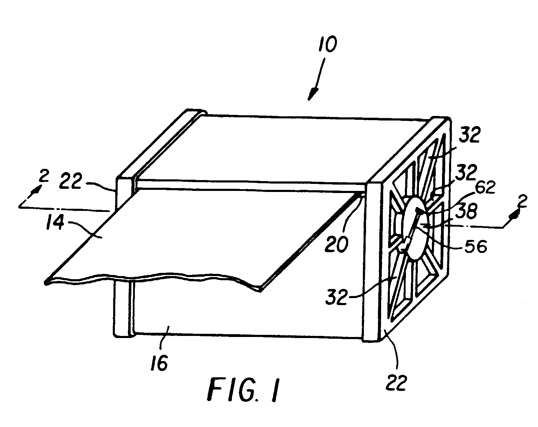

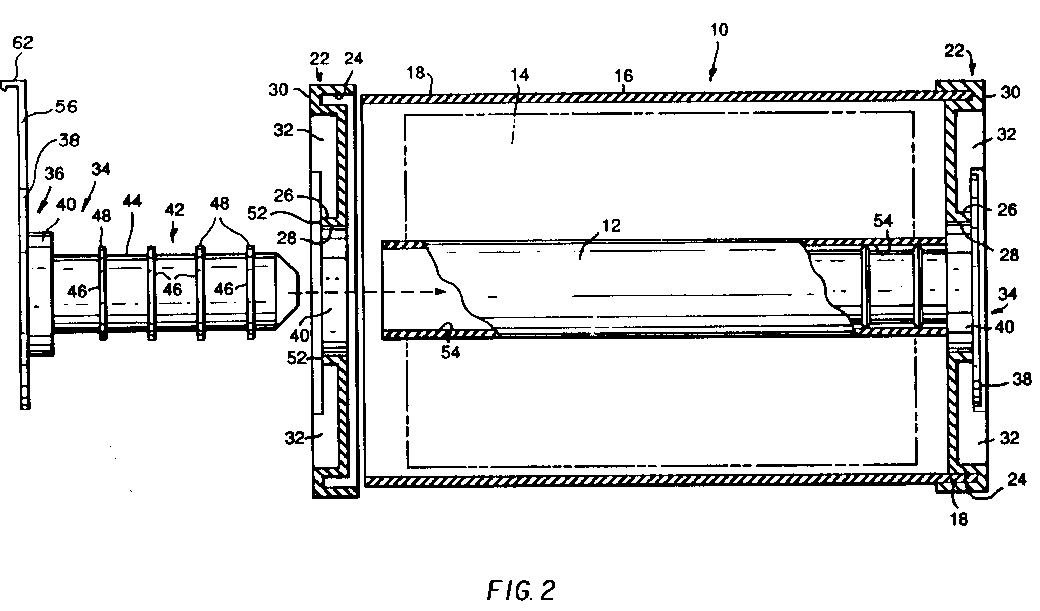

With reference to Figs. 1 and 2, a preferred embodiment of a web cassette **10** of this invention comprises a tubular core **12**, onto which is wound a web **14** of photosensitive material to form a web roll. Those skilled in the art will appreciate that just about any means of receiving a web material within the requirements of the invention can be used . The web roll is surrounded by any means within the requirements of the invention; preferably, the web roll is housed within a rectanguloid jacket **16** having end edges **18**. The jacket **16** has a peripheral web exit slot **20** extending substantially from one end edge thereof to the other, through which the web may be drawn from the cassette.

The web cassette **10** is provided with a pair of identical end portions **22**, each having a peripheral recess **24** for receiving an end edge **18** of the jacket **16**, as best seen in Fig. 2. Each of the end portions **22** has an inner cylindrical wall **26** defining a center opening **28**, a peripheral bifurcated outer wall **30** defining the recess **24** adjacent one end of the wall, and a plurality of stop means or strengthening ribs **32** radially extending from the inner wall **26** to the outer wall **30**.

A pair of identical core plugs **34** are provided for securing the end caps **22** onto the end edges **18** of the jacket **16**. Each of the core plugs **34** has a head portion **36** having an outer circular disk **38** and an inner cylindrical bearing **40** adapted to nest within the center opening **28** of the inner wall **26**. Each core plug **34** further has a body portion **42** comprising a rigid cylindrical part **44** provided with a plurality of axially spaced slots **46**. Each body portion **44** further has a plurality of flexible parts comprising annular rings **48** which nest within the peripheral slots **46**. The inner diameter of each ring **48** is smaller than the outer diameter of the rigid cylindrical part **44**, to provide an interference fit between the inner periphery of the ring **48** and the peripheral slot **46**. Each slot is further provided with bevelled edges, not shown, to allow flexing of the ring **48** when the core plug **34** is inserted through the inner bearing wall **26** of the end cap **22** into the core opening. When the core plug **34** is fully inserted into its assembled position, as seen on one end in Fig. 2, the cylindrical core plug bearing **40** is journaled within the inner bearing wall **26** of the end cap **22**. Also, the circular disk surface **38** bears against the end surface **52** of the inner bearing wall and ribbed surfaces **32** to force the end cap recesses **24** and jacket side edges **18** into a light-locked mating engagement, and to provide a light lock to prevent light from passing between the mating surfaces of the journal **40** and inner bearing wall **26** into the web cassette **10**.

Also in this assembled position, the flexed annular rings **48** are deformed conically into frictional engagement with the inner peripheral surface **54** of the core **12** to prevent withdrawal of the core plug **34** from its assembled position. This assures the securement of the end caps 22 on to the side edges 18 of the jacket 16 in light-tight relation without the necessity for adhesive and/or staples. Alternatively, the annular rings **48** can be molded as part of the plug body portion **42** to achieve substantially the same result. As the web **14** is withdrawn from the web cassette **10**, the web roll and core **12** are rotated along with the core plugs **34**. Advantages of the core plugs rotating along with the core and web roll are to clearly indicate to the operator that web is being transported and to provide rewinding capability.

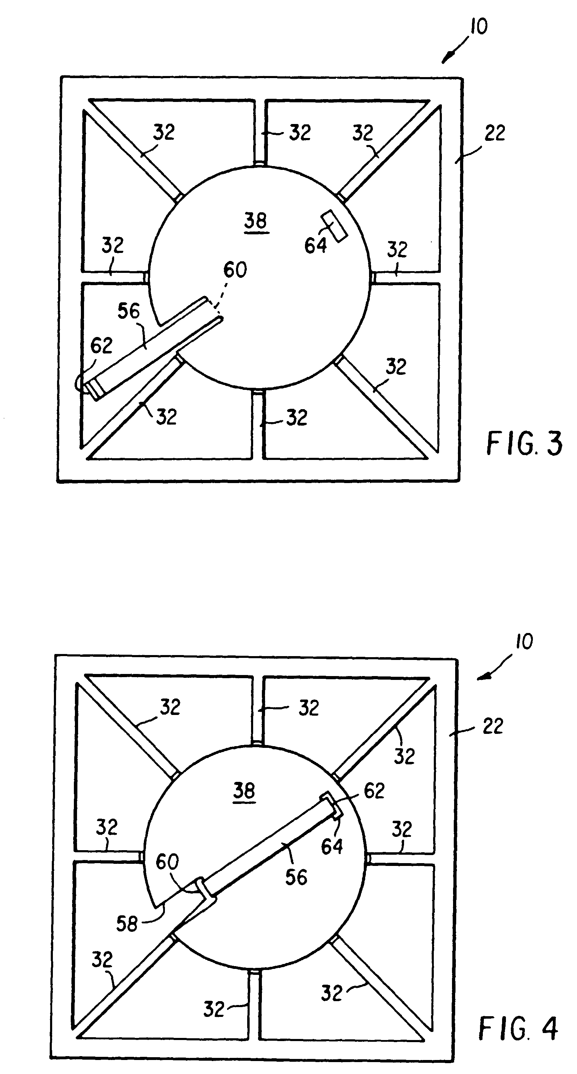

With reference to Figs. 3 and 4, the web cassette **10** is further provided with an anti-clockspringing means for securing the web core **12** against rotation within the cassette during shipping and handling, and for releasing the web roll for rotation in a forward direction during web transport from the cassette. The anti-clockspringing means comprises an arm **56** having one end thereof extending from a peripheral surface of a slot **58** in the core plug head **38** and connected to the peripheral surface of the head by a flexible hinge **60**. The opposite end of the arm **56** is provided with a laterally extending tab **62**. When the arm is extended radially outwardly into the space between a pair of ribs **32** on the end cap (Fig. 3), the anti-clockspringing device is in its core-blocking position. In this position, the arm **56** is confined between a rib **32** and outer wall **30** to block rotation of the core plug **34** and web roll. When it is desired to withdraw the web **14** from the cassette **10**, the arm **56** is pivoted about the hinge **60** to a core-unblocking position, in which the tab **62** is moved into engagement with a recess **64** in the core plug circular disk, as best seen in Fig. 4. In this position, the arm **56** is withdrawn from the space between the ribs **32** and outer wall **30**, and the core plugs **34** and web roll are free to rotate. Those skilled in the art will appreciate that other arrangements of the anti-clockspringing means are within the contemplation of the invention, for instance the arm **56** may be hingeably mounted to the end portion **22** and the stop means or ribs **32** arranged on the core plug head **38**.

Accordingly, an important advantageous effect of the present invention is that it provides a light-tight cassette and anti-clockspringing device that is of a simple design and construction, thoroughly efficient and reliable in operation, and economical to manufacture.

The invention has been described in detail with particular reference to a preferred embodiment thereof, but it will be understood that variations and modifications can be effected within the scope of the invention as herein claimed.

## Claims

1. A light-tight cassette (10) for holding and dispensing a roll of photosensitive web material (14), said cassette comprising
a) means (12) for receiving a roll of web material (14) wound thereon to form a web roll, said receiving means having an inner peripheral surface (54) defining an axial core opening;
b) means (16) for surrounding the web roll, said surrounding means having end edges (18) and a peripheral web exit slot (20);
c) a pair of end portions (22) each having an outer wall (30) defining peripheral recesses (24) for receiving the end edges (18) of said surrounding means (16) in light-tight relation, the end portions (22) further having central openings (28) in substantial alignment with the axial core opening, and a plurality of stop means (32) extending radially outwardly from the central openings (28) to the outer wall (30) for interacting with an anti-clockspringing means (56,58,60,62) on the cassette for securing the web core against rotation within the cassette during shipping and handling, and for releasing the web roll for rotation in a forward direction during web transport from the cassette;
characterised by
d) means (34) for plugging each end portion (22), each plugging means (34) having a head portion (36) and a body portion (42), whereby when the plugging means body portion (42) is pressed through the end portion central opening (28) into the axial core opening to an assembled position, the plugging means (34) is rigidly secured to the web roll for rotation therewith, and the end portions (22) are rigidly secured by the head portion (36) to the surrounding means (16) end edges (18) in light-tight relation; and
e) the anti-clockspringing means comprising an arm (56) on the plugging means head portion (36) movable between a core-blocking position in which the arm (56) extends into the space between two adjacent ones of the stop means (32), and is engageable with one of the stop means (32) and outer wall (30) for preventing rotation of the web roll, and a core-unblocking position in which the arm (56) is disengaged from the stop means (32) and outer wall (30) for allowing web roll rotation.

2. A light-tight cassette cited in Claim 1, further characterized in that the head portion (36) has a recess (64), and wherein one end of the arm (56) is connected to the periphery of the head portion (36) by a flexible hinge (60), and a tab (62) is provided on the other end of the arm (56) for releasably engaging the recess (64) for holding the arm (56) in the core-unblocking position.

3. A light-tight cassette recited in Claim 2, further characterized in that the head portion (36) has a radially extending peripheral slot (58) and the one end of the arm (56) is connected to a peripheral surface of the slot by the flexible hinge (60), and the tab (62) extends laterally from the other end of the arm (56).

4. A light-tight cassette recited in claims 1 to 3 further characterized by:
the body portion (42) of each core plug having a slightly larger diameter than the diameter of the axial core opening.

5. A light-tight cassette according to any one of Claims 1 to 4, further characterized in that the core plug body portion (42) comprises rigid (44) and flexible parts (48).

6. A light-tight cassette according to Claim 5, further characterized in that the rigid part (44) is cylindrical and has a peripheral slot (46), and wherein the flexible part (48) comprises a flat annular ring having its inner peripheral edge nesting within the slot (46), and its outer peripheral edge in frictional engagement with the inner peripheral surface (54) of the core (12).

## Patentansprüche

1. Lichtdichte Kassette (10) zum Aufnehmen und Abgeben einer Rolle mit lichtempfindlichem, bahnförmigem Material (14), mit
a) einer Vorrichtung (12) zum Aufnehmen einer bewickelten Rolle mit bahnförmigem Material (14) derart, daß ein Wickel entsteht, wobei die Aufnahmevorrichtung eine eine axiale Spulenöffnung bildende innere Umfangsfläche (54) aufweist,
b) einer Vorrichtung (16), die die Rolle umgibt und Endkanten (18) sowie einen an der Umfangsfläche vorgesehenen Austrittsschlitz (20) für das bahnförmige Material aufweist,
c) zwei Endabschnitten (22), die jeweils eine an der Umfangsfläche Aussparungen (24) bildende äußere Wandung (30) aufweisen, wobei die Aussparungen die Endkanten (18) der die Rolle umgebenden Vorrichtung (16) lichtdicht aufnehmen und die Endabschnitte (22) mit der axialen Spulenöffnung im wesentlichen ausgerichtete mittige Öffnungen (28) umfassen, und die jeweils eine Vielzahl von Anschlägen (32) aufweisen, die sich radial nach außen von den mittigen Öffnungen (28) zur äußeren Wandung (30) erstrekken und mit Mitteln (56, 58, 60, 62) an der Kassette zusammenwirken, die ein Aufspringen des Wickels verhindern und die Spule während des Versands oder der Verarbeitung gegen Drehung innerhalb der Kassette sichern, und die die Rolle freigeben, so daß sie während des Abspulens des bahnförmigen Materials aus der Kassette vorwärts drehbar ist, **dadurch gekennzeichnet**, daß
d) eine Vorrichtung (34) zum Stecken eines jeden Endabschnitts (22) vorgesehen ist, wobei jede Steckvorrichtung (34) ein Kopfteil (36) und ein Hauptteil (42) aufweist, so daß, wenn das Hauptteil (42) der Steckvorrichtung durch die mittige Öffnung (28) des Endabschnitts in die axiale Spulenöffnung gedrückt ist und dort eine zusammengesetzte Stellung einnimmt, die Steckvorrichtung (34) starr mit der Rolle aus bahnförmigem Material drehbar verbunden ist und die Endabschnitte (22) mittels des Kopfteils (36) starr an den Endkanten (18) der Vorrichtung (16) lichtdicht befestigt sind, und daß
e) die das Aufspringen des Wickels verhindernden Mittel (56, 58, 60, 62) am Kopfteil (36) der Steckvorrichtung einen Arm (56) aufweisen, der zwischen einer den Wickel blockierenden Stellung, in der sich der Arm (56) in den Raum zwischen zwei benachbarten Anschlägen (32) erstreckt und mit einem der Anschläge (32) und der äußeren Wandung (30) in Eingriff bringbar ist, um ein Drehen der Rolle mit bahnförmigem Material zu verhindern, und einer den Wickel freigebenden Stellung bewegbar ist, in der der Arm (56) außer Eingriff mit dem Anschlag (32) und der äußeren Wandung (30) gelangt, um eine Drehung der Rolle zu ermöglichen.

2. Lichtdichte Kassette nach Anspruch 1, dadurch gekennzeichnet, daß das Kopfteil (36) eine Ausparung (64) aufweist, daß das eine Ende des Arms (56) mit der Umfangsfläche des Kopfteils (36) mittels eines biegbaren Scharniers (60) verbunden ist und daß ein Haken (62) am anderen Ende des Arms (56) vorgesehen und lösbar mit der Aussparung (64) in Eingriff bringbar ist, um den Arm (56) in der den Wickel freigebenden Stellung zu halten.

3. Lichtdichte Kassette nach Anspruch 2, dadurch gekennzeichnet, daß das Kopfteil (36) einen sich an der Umfangsfläche radial erstreckenden Schlitz (58) aufweist und daß das eine Ende des Arms (56) mittels des biegbaren Scharniers (60) mit einer Umfangsfläche des Schlitzes verbunden ist und der Haken (62) sich seitlich vom anderen Ende des Arms (56) weg erstreckt.

4. Lichtdichte Kassette nach Anspruch 1 bis 3, dadurch gekennzeichnet, daß das Hauptteil (42) einer jeden Steckvorrichtung einen geringfügig größeren Durchmesser hat als die axiale Spulenöffnung.

5. Lichtdichte Kassette nach einem der Ansprüche 1 bis 4, dadurch gekennzeichnet, daß das Hauptteil (42) der Steckvorrichtung starre (44) und biegbare Teile (48) aufweist.

6. Lichtdichte Kassette nach Anspruch 5, dadurch gekennzeichnet, daß das starre Teil (44) zylindrisch ausgebildet ist und an seiner Umfangsfläche einen Schlitz (46) aufweist und daß das biegbare Teil (48) einen flachen Ring umfaßt, dessen innerer Umfangsrand im Schlitz (46) sitzt und dessen äußerer Umfangsrand in Reibungseingriff mit der inneren Umfangsfläche (54) der Spule (12) ist.

## Revendications

1. Cassette étanche à la lumière (10) destinée à contenir et à distribuer un rouleau de matériau photosensible en bande (14), ladite cassette comprenant :
a) un moyen (12) destiné à recevoir un rouleau de matériau en bande (14) enroulé sur celui-ci afin de former un rouleau de bande, ledit moyen de réception présentant une surface périphérique intérieure (54) définissant une ouverture axiale de mandrin,
b) un moyen (16) destiné à entourer le rouleau de bande, ledit moyen d'entourage présentant des bords d'extrémité (18) et une fente de sortie de bande périphérique (20),
c) une paire de parties d'extrémité (22), comportant chacune une paroi extérieure (30) définissant des évidements périphériques (24) destinés à recevoir les bords d'extrémité (18) desdits moyens d'entourages (16) en relation d'étanchéité à la lumière, les parties d'extrémité (22) comportant en outre des ouvertures centrales (28) sensiblement en alignement avec l'ouverture axiale du mandrin, et une pluralité de moyens d'arrêt (32) s'étendant radialement vers l'extérieur à partir des ouvertures centrales (28) vers la paroi extérieure (30), destinés à coopérer mutuellement avec un moyen anti-retour (56, 58, 60, 62) disposé sur la cassette afin d'empêcher le mandrin de la bande de tourner à l'intérieur de la cassette pendant l'expédition et la manipulation, et destiné à libérer le rouleau de bande pour le laisser tourner dans le sens direct pendant le transport de la bande hors de la cassette,
caractérisée par
d) un moyen (34) destiné à obturer chaque partie d'extrémité (22), chaque moyen d'obturation (34) comportant une partie de tête (36) et une partie de corps (42), grâce à quoi, quand la partie de corps du moyen d'obturation (42) est poussée au travers de l'ouverture centrale (28) de la partie d'extrémité jusque dans l'ouverture axiale du mandrin en position d'assemblage, le moyen d'obturation (34) est fixé de façon rigide au rouleau de bande pour tourner avec celui-ci, et les parties d'extrémité (22) sont fixées de façon rigide par la partie de tête (36) aux bords d'extrémités (18) du moyen d'entourage (16) en relation d'étanchéité à la lumière, et en ce que
le moyen anti-retour comprend un bras (56) monté sur la partie de tête (36) du moyen d'obturation, mobile entre une position de blocage du mandrin dans laquelle le bras (56) s'étend jusque dans l'espace compris entre deux moyens adjacents parmi les moyens d'arrêt (32), et peut être mis en prise avec l'un des moyens d'arrêt (32) et la paroi extérieure (30) afin d'empêcher la rotation du rouleau de bande et une position de déblocage du mandrin dans laquelle le bras (56) est dégagé du moyen d'arrêt (32) et de la paroi extérieure (30) afin de permettre la rotation du rouleau de bande.

2. Cassette étanche à la lumière selon la revendication 1, caractérisée en outre en ce que la partie de tête (36) comporte un évidement (64), et dans laquelle une première extrémité du bras (56) est reliée à la périphérie de la partie de tête (36) par une charnière flexible (60), et une languette (62) est disposée sur l'autre extrémité du bras (56) afin de s'engager de façon amovible dans l'évidement (64) pour maintenir le bras (56) dans la position de déblocage du mandrin.

3. Cassette étanche à la lumière selon la revendication 2, caractérisée en outre en ce que la partie de tête (36) comporte une fente périphérique s'étendant radialement (58), et la première extrémité du bras (56) est reliée à une surface périphérique de la fente par la charnière flexible (60), et la languette (62) s'étend latéralement à partir de l'autre extrémité du bras (56).

4. Cassette étanche à la lumière selon les revendications 1 à 3, caractérisée en outre par le fait que la partie de corps (42) de chaque obturateur de mandrin présente un diamètre légèrement supérieur au diamètre de l'ouverture axiale du mandrin.

5. Cassette étanche à la lumière selon l'une quelconque des revendications 1 à 4, caractérisée en outre en ce que la partie de corps (42) de l'obturateur de mandrin comprend des parties rigide (44) et flexible (48).

6. Cassette étanche à la lumière selon la revendication 5, caractérisée en outre en ce que la partie rigide (44) est cylindrique et comporte une fente périphérique (46), et dans laquelle la partie flexible (48) comprend une bague annulaire plate dont le bord périphérique intérieur se loge à l'intérieur de la fente (46), et dont le bord périphérique extérieur est en contact par frottement avec la surface périphérique intérieure (54) du mandrin (12).
